# EUROPEAN PATENT APPLICATION

(11) **EP 1 128 378 A2**
(43) Date of publication of application: **29.08.2001**
(21) Application number: 01301078.0
(22) Date of filing: 07.02.2001
(51) Int. Cl.: G11B 19/04, G11B 19/12, G11B 20/12, G11B 7/007, G11B 7/013

(54) **System and method to provide overwrite protection using write and verify passes**

(30) Priority: 28.02.2000 US 514920
(71) Applicant: Plasmon LMS, Inc., Colorado Springs, CO 80907 (US)
(72) Inventor: Bolt, David A., Colorado Springs, Colorado 80918 (US)
(74) Representative: Abrams, Michael John

(57) **Abstract**

Overwrite protection for data storage-system is provided by including a dedicated overwrite protection area to each data sector which can then be checked and/or written during the write and verify steps typically undertaken by a data storage system. This dedicated overwrite protection area is positioned at the beginning of each sector to allow easy and quick checking to ensure that data has not been written in the designated sector. If an overwrite protection byte has been written in this dedicated area, write operations can be ceased and appropriate notifications created. After data has been written, the overwrite protection byte is then inserted into the dedicated overwrite protection area during the verify pass. This will then ensure that data will not be overwritten to this area, as the overwrite protection byte will be checked during any subsequent write pass.

## Description

### BACKGROUND OF THE INVENTION

The present invention relates to data storage systems which utilize optical storage media. More specifically, the present invention relates to an optical disk storage system with overwrite protection capabilities to ensure that user data is not mistakenly overwritten and destroyed.

Optical data storage systems provide an efficient and useful way to store large amounts of data for use in today's computer systems. In these systems, data is written directly to an optical storage media using appropriate lasers and focusing mechanisms. Similarly, the same lasers and optical components are used to read data from these optical disks.

When managing the data storage operations of these optical storage systems, it is important to ensure that data is not inadvertently overwritten and destroyed. As can easily be appreciated, the overwriting of data, including even small portions thereof, can disrupt and destroy large amounts of data.

Data is often written to the optical storage media in two separate passes. A first pass actually writes the data to the disk, while a second pass then verifies the written data. This verify pass ensures that the data is readable with sufficient margin.

In many situations it is desirable to disallow the overwriting of data in those areas where data has previously been written. Obviously, an additional verify pass can be added prior to writing, where the desired area is read. This would confirm that no data has been written to the desired area. However, this approach adds an additional read pass, and more than doubles the time required to write data to the disk. As is well known, the write speed is critical for disk storage systems, thus this methodology is not acceptable.

In certain optical systems, it is possible to detect existing data while new data is being written. For example, in optical disk systems where the reflectance of an area varies depending on whether data has previously been written, this reflectance change may be used to detect existing data. In order to detect this change in reflectance, a light signal is directed towards the disk and a reflected light signal is detected by the associated sensor. Using the reflected light signal, it may then be possible to determine whether data has been previously written to the specific area. Based upon this evaluation, the writing function can be discontinued if it is determined that data already exists in that sector. For example, if this reflectance change can be detected while writing a sector preamble, the writing operations can easily be stopped before the user area of this sector is reached. While this method does provide some level of user data protection, it does involve overwriting certain preamble areas, which is again an undesirable activity. Also, this is dependent upon the readout optics being capable of detecting the reflectance change.

In an alternative method previously used for overwrite protections, the optical head is put into a read mode between write pulses. When in this read mode, the system can obviously detect existing data. This methodology again relies on a change in the reflectance of the optical media surface. Also, this methodology requires the switching between read modes and write modes, which is time consuming and requires processor overhead.

Each of the above-referenced write protection methodologies rely on a reflectance change in the optical disk surface. Obviously, either of these methods would not work where this reflectance change is not detectable.

The reflectance change referred to above typically involves a reduction in reflectance when data has been written. More specifically, the written areas are less reflective than those areas that do not have previously written data. These storage systems are said to produce "dark marks" where the data has been written. These dark marks are easily detectable by the optical systems. However, in other systems the reflectance increases where data has been written. Where the reflectance increases, a brighter light signal will be reflected which must be resolved by the optics of the system. Due to the optical configuration of the read/write heads, this higher reflectance can not be easily detected. The read/write head and associated electronics are simply not designed to resolve these brighter light signals. As such, each of the above mentioned overwrite protection schemes can not be used.

There is a need to produce a system and methodology which can prevent overwriting and protect previously written data, which is operable in all types of data systems. This system and methodology must be effective and relatively fast so that the read/write speed of the storage system is not compromised.

The present invention seeks to provide a solution for overwrite protecting data which is applicable to all types of data storage media. Within each data storage sector, a dedicated overwrite protection area is provided. This overwrite protection area is positioned at the beginning of each sector, thus can be quickly analyzed before any data is written. Consequently, overwriting can be avoided as the system can easily stop its writing operations. Further, this methodology utilizes the existing write and verify passes, without requiring additional operations.

In operation, the present invention begins when a request is received from the host computer to write data to the data storage media. The typical write and verify process is generally undertaken to satisfy this storage request. The process is slightly modified however, to provide the desired overwrite protection. During the write phase, the system will scan the dedicated overwrite protection area to determine if an overwrite protection byte has been written in that area. If this overwrite protection byte is detected, the system will cease its writing operations and return an overwrite attempt error to the host computer. Alternatively, if the overwrite protection byte has not been written, the process proceeds with the remainder of the write pass. Specifically, data is written to that sector utilizes standard data writing techniques. Subsequently, a verified pass is conducted to again verify that the data is readable and that it has been properly written. Also, during this verify pass the overwrite protection byte is written in the dedicated overwrite protection area. Thus, further attempts to write data to this sector will be prevented by the detection of this overwrite protection byte.

The overwrite protection methodology utilizing the dedicated overwrite protection area and an overwrite protection byte is accomplished by providing appropriate instructions to the storage system controller. Consequently, no additional components are necessary. Further, the overwrite protection is accomplished using the preexisting write and verify passes, thus no additional activity is required.

The present invention advantageously provides an overwrite protection methodology which is applicable to virtually all storage media types. Preferably, an overwrite protection methodology is provided which can be used with optical storage media having either "dark mark" characteristics or "bright mark" characteristics.

Furthermore, preferred embodiments of the present invention seek to provide an overwrite protection methodology which can be implemented in the standard write and verify passes of an optical storage system.

It is advantageous for the present invention to provide a data storage system which incorporates a dedicated overwrite protection area at the beginning of each data storage sector. Such a system can then check for the presence of an overwrite protection byte previously written to this dedicated overwrite protection area, prior to writing data in the user storage area.

It is also advantageous for the present invention to provide an overwrite protection scheme which will avoid overwriting of user data and thus destroying or losing that information.

For a better understanding of the invention, and to show how the same may be carried into effect, reference will now be made, by way of example, to the accompanying drawings, in which:-
Fig. 1 is a schematic drawing illustrating the disk storage system and host computer;
Fig. 2 is a graphical illustration of a plurality of written and unwritten sectors on the data storage media; and
Fig. 3 is a flow chart illustrating the data storage and write protection methodology.

The present invention provides a data writing system and methodology which seeks to provide overwrite protection. The overwrite protection methodology utilizes the existing write and verify passes of a typical data storage system, thus requires no additional time overhead or writing delay.

Generally speaking, the present data storage system dedicates a predetermined overwrite protection area at the beginning of each data sector. This overwrite protection area can then be utilized to identify those data storage areas which already contain stored data. Consequently, the system can then halt its writing operations and provide an error signal to the host computer when previously written data is detected. The dedicated write protection area is configured so that an overwrite protection byte can be written to that area after data is written to that sector. This overwrite protection byte can then be easily detected during a subsequent write pass.

Most importantly, the present invention incorporates this overwrite protection methodology into existing write and verify passes of a data storage system. Consequently, no additional time or operations are necessary and the read/write speed of the storage system is not compromised.

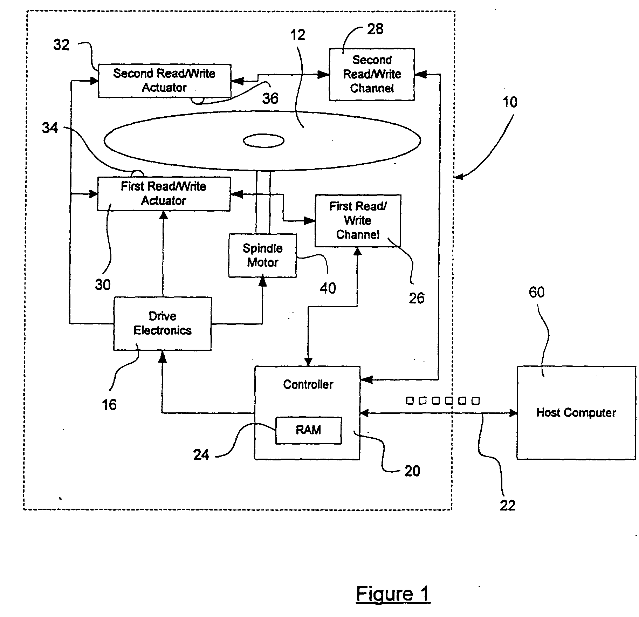

Referring now to Figure 1, there is shown a schematic diagram of the disk storage system 10 which is capable of incorporating and using the present overwrite protection methodology. Obviously, disk storage system 10 will receive data storage requests from a host computer 60. These requests will ask storage system 10 to write data to an optical media 12 -- a core component of the system. Optical media 12 could include an optical disk, however is not necessarily limited to that type of storage device. Disk storage system 10, necessarily has a first read/write head 34 incorporated therein for writing data to the optical media 12 as well as reading data therefrom. In the embodiment shown, both first read/write head 34 and a second read/write head 36 are necessary as two sides of optical medial 12 are being used. Disk storage system 10 further includes drive electronics 16 for directing the functions of the drive. Also associated is a drive controller 20 which includes a memory or RAM 24. Instructions related to the operation of storage system 10, may be stored in RAM 24, or drive electronics 16, or both. Interacting with the output from first read/write head 34 is a first read/write channel 26 which necessarily includes an internal decoder (now shown). Read/write channel 26 provides a data path for storage system 10. Similarly, a second read/write channel 26 is associated with second read/write head 36 and provides data to controller 20.

It will be understood that many variations could be incorporated into this component hardware. Also, various functions may be directed by controller 20 or may be controlled by other components, such as disk electronics 16. As seen in Figure 1, controller 20 can be in communication with host computer 60 via host interface 22.

First read/write head 34 and second read/write head 36 includes various components which efficiently accommodate their operation. Specifically, a first read/write actuator 30 is included for controlling the motion for first read/write head 34. Similarly, a second read/write actuator controls the motion of second read/write head 36. It is understood that both first read/write actuator 30 and second read/write actuator 32 cooperate with drive electronics 16 to accomplish all necessary positioning and alignment. Also, controller 20 and drive electronics 16 direct the reading to/writing from optical media 12.

Also included is a spindle motor 40 for controlling the rotational movement of optical media 12. Drive electronic 16 cooperate with all of these components to appropriately coordinate their functions and provide reading and writing capabilities.

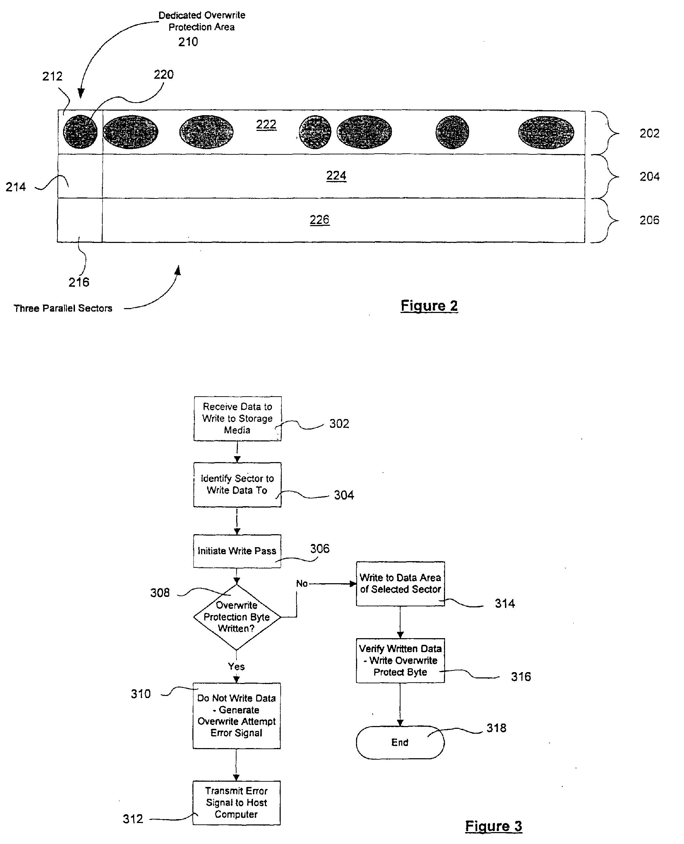

Referring now to Figure 2, there is shown a graphical illustration of several data sectors. Specifically, a first data sector 202, a second data sector 204, and a third data sector 206 are shown. It will be understood that multiple data sectors will exist on all other sides of these illustrated sectors. As can be seen, first sector 202 includes previously written data, while second sector 204 and third sector 206 are empty. Thus, the present invention will protect overwriting of first data sector 202, but will allow data to be written to second sector 204 and third sector 206.

All of the shown data sectors (202, 204 and 206) include a dedicated overwrite protection area 210. A first dedicated overwrite protection area 212 is shown in Figure 2 as having data written thereto, while a second dedicated overwrite protection area 214 and a third dedicated overwrite protection 216 are empty. In the write pass of the data writing procedure, the system will examine the dedicated overwrite protection area to determine if the overwrite protection byte has been written therein. In the example of Figure 2, first dedicated overwrite protection area 212 includes a written overwrite protection byte 220. If this overwrite protection byte has been written (as shown in first dedicated overwrite protection area 212), the writing mechanism will be stopped and an error signal will be produced indicating that an overwrite attempt has been made. However, if an overwrite protection byte is not detected, the process will proceed with its writing operations. In the case shown in Figure 2, data can be written to the data storage area of the sector. Specifically, data could then be written to the data storage area 224 of second sector 204, or the data storage area 226 of third sector 206.

Referring now to Figure 3, there is shown a flow chart which illustrates the overwrite protection methodology utilized by the present invention. This process is initiated in step 302 when a request is received from the host computer to write data to the storage media. Next in step 304, the system identifies the sector which data is to be written to. In step 306, the write pass is initiated. The first step following this write pass is to determine whether the overwrite protection byte has been written in the dedicated overwrite protection area for the identified sector. This determination is shown in step 308 of the flow chart. If the overwrite protection byte has been written, the process moves on to step 310 where the data writing operations are halted and an error signal is produced indicating an overwrite attempt has been made. Next, in step 312 this error signal is communicated to the host computer.

Returning to step 308, if it is determined that the overwrite protection byte has not been written, the process moves to step 314 and continues by writing data to that identified sector. Next, in step 316 the verify pass is initiated wherein the data is checked to ensure it has appropriately been written and can be resolved. Also, in this verify step 314 the overwrite protection byte is written in the dedicated overwrite protection area, thus ensuring that further write attempts can be stopped before overwriting this data. This operation then completes the writing operation and the process ends at step 318.

Those skilled in the art will further appreciate that the present invention may be embodied in other specific forms without departing from the spirit or central attributes thereof. In that the foregoing description of the present invention discloses only exemplary embodiments thereof, it is to be understood that other variations are contemplated as being within the scope of the present invention. Accordingly, the present invention is not limited in the particular embodiments which have been described in detail therein. Rather, reference should be made to the appended claims as indicative of the scope and content of the present invention.

## Claims

1. A method of write protecting data stored on a data storage media using the write and verify passes of a data storage system, comprising the steps of:
i) designating an overwrite protection area near the beginning of each data storage sector on the storage media;
ii) initiating the write pass of the data storage system;
iii) examining the overwrite protection area prior to writing data to the data sector to determine the presence of an overwrite protection byte, and if the overwrite protection byte is present, immediately stopping the writing operations and producing an error signal;
iv) writing the data to the data sector during the continuation of the write pass if the write protection byte is not present; and
v) initiating the verify pass of the data storage system following the writing pass, wherein the verify pass includes writing the overwrite protection byte in the designated, overwrite protection area.

2. A method of overwrite protecting data stored in a plurality of data storage sectors of a data storage media, comprising the steps of:
i) designating an overwrite protection area within each of the plurality of data storage sectors;
ii ) examining the overwrite protection area of a particular data storage sector for the presence of an overwrite protection byte prior to writing any data to the data storage sector; and
iii) producing an error signal if the data storage byte is detected prior to writing data.

3. A method according to claim 2, wherein the data is written to the data storage sector if the overwrite protection byte is not present.

4. A method to claim 3, wherein the overwrite protection byte is written to the designated overwrite protection area after the data is written.

5. A method according to claim 3 or 4, wherein the overwrite protection byte is written during a verify pass of the data storage system.

6. A method according to any one of claims 2 to 5, wherein the overwrite protection area is examined at the beginning of a write pass of the data storage system.

7. A overwrite protected data storage system for storing data and overwrite protecting data during the write and verify passes of a storage read/write head, comprising:
a data storage media having a storage area defined by a plurality of data storage sectors, each of the data storage sectors having a designated overwrite protection area;
a read/write system for operating the read/write head; and
a controller for cooperating with the read/write head and producing appropriate output signals, such that the overwrite protection area is first examined for the presence of an overwrite protection byte during the write pass of the read/write head and the write pass is halted if the overwrite protection byte is present.

8. A method of preventing the overwriting of data when a write request is received from a host computer which utilizes the existing write and verify passes of a data storage system, the method comprising the steps of:
i) designating an overwrite protection area in each storage sector of a data storage disk, the overwrite protection area including an overwrite protection,bit when data has previously been written to that sector, and being empty when data has not previously been written to that sector;
ii) in response to the write request, initiating the write pass of the data storage system, the write pass comprising:
a) examining the designated overwrite protection area to determine the presence of the overwrite protection bit, and where the overwrite protection bit is present, generating an overwrite error message; and
b) writing the data when the overwrite protection bit is not present;
iii) verifying the written data if the overwrite protection bit is not present and writing the overwrite protection bit.

9. A method according to claim 8, wherein the overwrite protection area is at the beginning of the storage sector.

10. A method according to claim 8 or 9, wherein the write pass is terminated when the error message is generated.
